# EUROPEAN PATENT APPLICATION

(11) **EP 2 597 395 A1**
(43) Date of publication of application: **29.05.2013**
(21) Application number: 11809307.9
(22) Date of filing: 19.07.2011
(51) Int. Cl.: F24J 2/05, F24J 2/46

(54) **NOVEL ARRANGEMENT OF NON-EVAPORABLE GETTERS FOR A TUBE SOLAR COLLECTOR**

(30) Priority: 19.07.2010 ES 201000926
(71) Applicant: Abengoa Solar New Technologies, S.A., 41018 Sevilla (ES)
(72) Inventor: NUÑEZ BOOTELLO, Juan Pablo, E-41018 Sevilla (ES); MARTÍNEZ SANZ, Noelia, E-41018 Sevilla (ES)
(74) Representative: Garcia-Cabrerizo y del Santo, Pedro Maria
(86) International application number: PCT/ES2011/000233
(87) International publication number: WO 2012/010723

(57) **Abstract**

The invention relates to a novel arrangement of non-evaporable getters for a tube solar collector, said tube collector being of the type that includes an outer glass tube (2); an inner metal tube (3) through which a heat-transfer fluid flows; a vacuum chamber between both tubes; and, at the ends, non-evaporable getter pellets (1) that absorb gas molecules that could produce a loss of vacuum between the inner tube (3) and the outer tube (2) and the covers (8) at which a bellows-type expansion compensating device (4) is positioned. The inner metal tube (3) and outer glass tube (2) are positioned eccentrically to one another, forming a thicker area and a narrower area in the cover (8), said narrower area being used for the positioning, by means of bonding, of the non-evaporable getter pellets (1).

## Description

### Technical sector of the invention

The present invention is framed within the sector of thermosolar energy, specifically within the developments of tube solar collectors, and more specifically, it focuses on the possible location of non-evaporable getters or vacuum evacuators within this type of tube collectors.

### Background of the invention

Getters are solid materials, alloys of different metals, capable of chemically absorbing gas molecules at their surface. They are broadly used for a variety of applications, such as in particle accelerators, vacuum tubes, inert gas purification systems, etc.

The non-evaporable getter of the invention will be used in a vacuum tube, of those used as solar receivers. In general, these receivers consist of two concentric tubes, between which the vacuum is generated. The inner tube, through which the heated fluid flows, is metallic and the outer tube is made from glass, usually boron-silicate.

A bellows-type expansion compensating device is positioned between both tubes in order to allow the relative movement between the metal tube and the glass tube, thus absorbing the tensions that would be created due to the difference existing between the dilatation coefficients of both tubes, thus guaranteeing the vacuum.

In addition to the expansion compensating device, this type of tubes requires the installation of materials that detect and suppress the hydrogen molecules that could be introduced into the vacuum area. These molecules are produced due to the thermal degeneration suffered by the oil used as heat-transfer fluid that circulates through the interior of the metal tube, due to the high temperatures that it reaches. These molecules end up passing through the metal tube and entering the vacuum area, increasing thermal losses and, therefore, decreasing the efficiency of the system in a significant manner.

This is why alloys of the non-evaporable getter type are always installed in the vacuum area so potential H₂ molecules are captured by the surface of this material.

There are different non-evaporable getter designs located in different locations within the vacuum area in the developments known to date. One example is patent US 2007034204 A1, held by SCHOTT. In this document, the non-evaporable getter is arranged in an outer ring space between the expansion compensating device and the glass-metal transition element. The getter is protected against incident solar radiation by the glass-metal transition element and against reflected radiation by the expansion compensating device. Therefore, we have a structure that is radially composed by the metal tube, the connecting element, the expansion compensating device, the non-evaporable getter, the glass-metal transition element and the glass tube from the inside out.

This arrangement has the following series of inconveniences: the increase of the minimum diameter necessary to house all of these elements within, the submission of the getter to the mechanical efforts suffered by the expansion compensating bellows, the need to introduce the round getter pellets into a sheath with a protective mesh that brushes against the expansion compensating device and, if more material is needed to increase the absorption, there is no other option but to increase the size or number of getter pellets, which implies the increase of the diameter of the glass tube. In addition, since it is installed at only one of the ends of the tube, it supposes that the tube will have different shapes at both sides. Therefore, the assembly is very artisanal and it cannot be automatized because, in addition, the pellets making up the getter are thin and very fragile.

Another example is the development of the company SOLEL SOLAR SYSTEMS LTD, which locates the getters along the entire length of the tube, away from the covers, as in document IL153872 A, which positions a support within the vacuum area and along the entire length of the absorption tube, where it positions the getter pellets. The foregoing implies an efficiency loss because the useful surface for the capture of solar radiation is drastically reduced.

Therefore, the objective of the present invention is to provide a new design to locate the non-evaporable getters of the absorption tubes so it becomes even easier to assemble than the previous one, and to continue solving all of the inconveniences described in the state of the art, even increasing the rigidity of the tube without decreasing the efficiency of the system.

### Description of the invention

The invention consists of a new getter arrangement for a tube solar collector, as well as several modifications to the rest of the tube, mainly to its ends, according to this novel arrangement.

Despite its importance, the function of the non-evaporable getters should not interfere with the main purpose of the receiver tube, which is to maximize its thermal performance. Its arrangement should allow this situation without compromising its function to guarantee the correct aging of the product.

As commented above, due to its diverse locations in the state of the art, it used to originate a different casing shape in each one of the ends in order to house it, which in turn conditioned the value of the diameter of the glass or boron-silicate cylinder.

In order to solve the problems found in the known state of the art, new design proposals related to the geometry and arrangement of the tube collector and the set of non-evaporable getters have been developed.

These new proposals are the following:
1. New metal tube shape, similar to the current one, but having a glass tube with a greater diameter and a defined eccentricity with respect to the metal tube depending on the optics of the collector. The eccentricity of the tube allows improving the optical behavior of the receiver tube because the glass tube may be used as a substrate to add a solar reconcentrator by means of partial mirroring, which is discussed below.
2. The new glass tube is partially mirrored. The mirrored area is turned into an optical surface with tolerances that must be minimized and controlled because excessive irregularities in this optical surface could prevent the reflected rays from reaching the metal tube. The mirroring may be directly applied to the inner face of the glass tube or by directly mirroring the outer face of the glass tube or by adding a film or fine mirror to any of the inner or outer faces of the glass tube.
3. The solar radiation reaches the metal tube in the entire perimeter. The flow distribution is not homogenous in the perimeter; the heat flow is greater in the perimeter that is found facing the primary reflector directly. These new contour conditions mean that the tension state generated before this new thermal load is different than the one known in the state of the art.
4. The metal tube and the glass tube must always be sectioned in the same position because any relative movement could cause the escape of the rays. Since the metal tube and the glass tube have different thermal dilatation coefficients and the shape of the tubes changes, the dilatation compensation element (bellows) should allow the relative axial deformation between both tubes before the new thermal load defined in point 3, while ensuring the control of the relative movements between the metal tube and the glass tube outside their axis. A new bellows concept must therefore be developed with a frontal face with variable thicknesses and local stiffening (nerves).
5. New getter concept. The new bellows shape originates novel arrangement concepts for the getter pellets, as well as the eccentricity of the tubes, which generate a free space in the covers that will be used for the new location of the getters, thus solving the problems found in the state of the art with the previous arrangements.

Once the needs regarding the amount of getter material for 4-meter tubes and an average plant life of 25 years is defined, if this amount is distributed between the two ends of the tube, the getters will no loner need to be located in an outer part of the receiver tube, and toroidal shapes in both ends will no longer be required. This way, a space that would otherwise be lost because only one side of the receiver tube would be used to locate the getters can be optimized.

Regarding the shape, the getter system of the invention is formed based on standard pellets without needing a specific manufacture for this development, which will be adhered to the lower part of the covers in the space left due to the eccentricity, thus avoiding the arrangement of a sheath and a protective mesh wherein the pellets are housed.

In addition, the symmetry in the tube is maintained because both ends of the tube are identical, which supposes a thermal and manufacturing advantage due to the unification of components.

The tube is also optimized by using the hole in the cover that is created due to the eccentricity existing between the inner metal tube and the outer glass tube.

This novel arrangement also implies that if more getters are needed, the only requirement is to increase the number of pellets adhered to the cover because there is enough space, thus avoiding having to increase the diameter of the glass tube to add more pellets, with the additional advantage that the present development allows pellets of all shapes.

### Description of the drawings

In order to complete the description being made and with the purpose of aiding a better comprehension of the invention, a set of drawings is attached, wherein the following has been represented in an illustrative rather than limitative manner:
Figure 1. State of the art Solel Solar System.
Figure 2. State of the art Solel Solar System LTD (IL153872 A).
Figure 3. State of the art Schott (US2007034204 A1).
Figure 4. Eccentricity of the tubes of the invention.
Figure 5. Inner perspective of the end of the tube.
Figure 6. Outer perspective of the end of the tube.
Figures 7-9. Alternate designs of the ends of the tube.

The references that appear in the figures represent the following:
(1) Non-evaporable getters
(2) Outer glass tube
(3) Inner metal tube
(4) Dilatator or expansion compensating element or bellows
(5) Nerves
(6) Areas of variable thickness
(7) Mirrored area
(8) Cover of the tube solar collector

### Preferred embodiment of the invention

In order to achieve a better comprehension of the invention, the novel arrangement of non-evaporable getters for a tube solar collector will be described below according to a series of preferred embodiments.

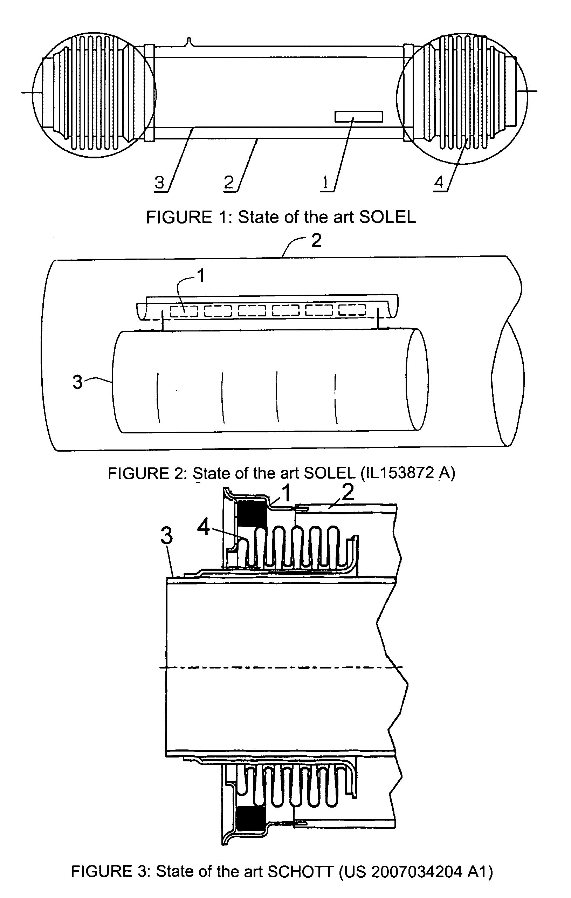

In order to achieve a better comprehension of the current problem, figures 1-3 show different designs of the state of the art (the references of said figures do not correspond to the originals; they have been unified for a better comprehension of this document).

Figure 1 represents a solution used by the company Solel Solar Systems Ltd that implies installing the non-evaporable getters (1) in the empty space between the glass tube (2) and the metal tube (3).

Figure 2 shows another solution of the same company, Solel Solar Systems Ltd, which in this case locates the getters (1) in a pellet-holding device, which is supported on two supports over the metal tube (3) and goes through part of the tube in the longitudinal direction.

Figure 3 shows the tube created by Schott, which locates the getters (1) in one of the two ends by putting the pellets in a ring-shaped holding mesh.

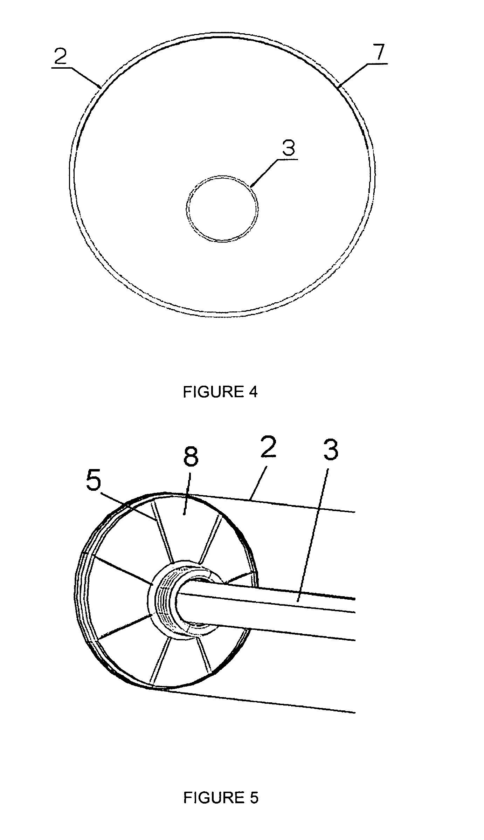

The invention claimed herein is characterized, among other aspects, by the eccentricity existing between the metal tube (3) and the glass tube (2) as shown in figures 4 to 6.

Figures 4 to 6 show the aforementioned eccentricity and, in the case of figure 4, the area of the glass tube (2) being mirrored (7) for a greater capture of solar radiation.

In addition to the eccentricity between the tubes (2, 3), figure 5 shows a series of radial and equidistant nerves (5) with which the cover of the tube will be manufactured in order to increase its rigidity. The glass tube (2) has a greater diameter than current commercial tubes and is partially mirrored and located eccentrically with respect to the metal tube. In addition, it has a different dilatation coefficient than the former, which is normally manufactured in steel (3). Therefore, the dilatation compensating element (bellows) (4) must allow, before the new thermal load defined above (description of the invention, point 3), the relative axial deformation between both tubes (2, 3), while annulling the relative displacement between the metal tube (3) and the glass tube (2) at the same time.

Another way of increasing the rigidity of the covers would be to manufacture them with a variable thickness depending on the area of the cover under study.

Both solutions could be even combined to ensure the complete rigidity of the system.

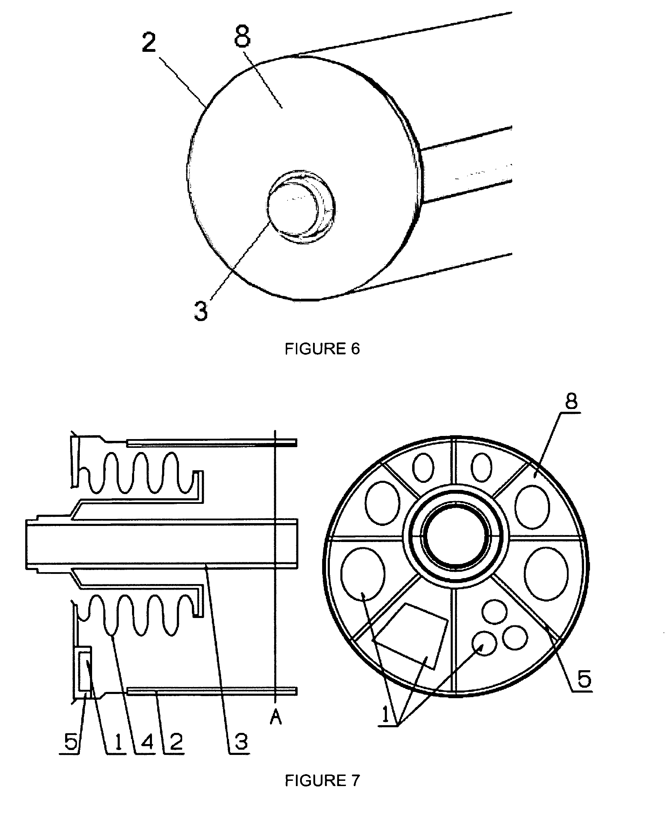

Figures 7-9 show three different solutions for the claimed invention.

In the case of figure 7, two views are represented, an elevational view and an A-sectioned view in order to achieve a configuration wherein the cover (8) has a constant thickness but a series of radial nerves (5) have been added. In the cover (8), where there is more space due to the greater diameter of the glass tube and the eccentricity of the tubes (2, 3), the getter pellets (1) have been bonded, which, thanks to this advantageous way of positioning, admit all shapes and do not require any additional holding device.

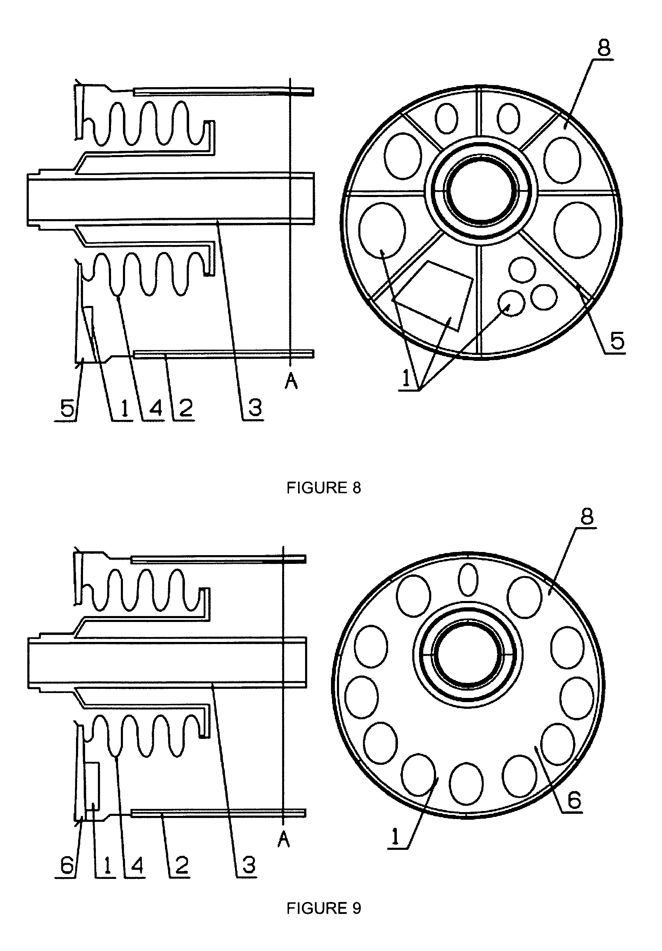

The design of figure 8 is very similar, having a cover (8) with a constant thickness and radial nerves (5), although in this case, the nerves (5) slightly change their shape and are provided with a variable thickness, so they are thicker at one of the ends than the other. In the case of the preferred embodiment, the area closest to the center is thinner, thus optimizing the shape of the cover and minimizing the contribution of material. In terms of the getter pellets (1), as well as in the previous case, they can be of any shape because they are adhered to the cover at the holes between nerves (5), in the wider area due to the eccentricity of the tubes.

The design of figure 9 consists in providing the cover (8) with variable thickness (6) according to the areas that require greater rigidity and adhering the getter pellets (1) to the cover (8). The pellets (1) may be of any shape, although they have all been represented with an oval shape in figure 9.

Although it is not represented in any figure, there could be another design wherein the cover (8) would have a variable thickness (6) and also nerves (5), and the pellets (1) would be bonded in the holes.

This novel arrangement of non-evaporable getters is specially designed for its application in solar energy receiver vacuum tubes, but its extension to other fields of the industry requiring similar characteristic is not ruled out.

## Claims

1. Novel arrangement of non-evaporable getters for a tube solar collector, the tube collector being of the type that includes an outer glass tube (2); an inner metal tube (3) through which a heat-transfer fluid flows; a vacuum chamber between both tubes; and, at the ends, non-evaporable getter pellets (1) that absorb gas molecules that could produce a loss of vacuum between the inner tube (3) and the outer tube (2) and the covers (8) at which a bellows-type expansion compensating device (4) is positioned, **characterized in that** the inner metal tube (3) and outer glass tube (2) are positioned eccentrically to one another, forming a thicker area and a narrower area in the cover (8), said narrower area being used for the positioning, by means of bonding of the non-evaporable getter pellets (1).

2. Novel arrangement of non-evaporable getters for a tube solar collector according to claim 1, **characterized in that** the cover (8) is reinforced with a series of radial nerves (5).

3. Novel arrangement of non-evaporable getters for a tube solar collector according to claim 2, **characterized in that** the nerves (5) are equidistant.

4. Novel arrangement of non-evaporable getters for a tube solar collector according to claim 2, **characterized in that** the nerves (5) have variable thicknesses.

5. Novel arrangement of non-evaporable getters for a tube solar collector according to claim 4, **characterized in that** the thinnest end of the nerves (5) is the closest to the center of the cover (8).

6. Novel arrangement of non-evaporable getters for a tube solar collector according to claim 1, **characterized in that** the cover (8) has a variable thickness (6) according to the different areas.

7. Novel arrangement of non-evaporable getters for a tube solar collector according to claim 1, **characterized in that** the cover has a variable thickness (6) and it also has nerves (5).

8. Novel arrangement of non-evaporable getters for a tube solar collector according to claim 2 or 7, **characterized in that** the getter pellets (1) adhere at the free space between the nerves (5).

9. Novel arrangement of non-evaporable getter for a tube solar collector according to any one of the previous claims, **characterized in that** mirroring (7) is made to an area of the outer glass tube (2).

10. Novel arrangement of non-evaporable getter for a tube solar collector according to claim 9, **characterized in that** the mirroring can be applied directly to the inner face of the glass tube.

11. Novel arrangement of non-evaporable getter for a tube solar collector according to claim 9, **characterized in that** the mirroring can be applied directly to the outer face of the glass tube.

12. Novel arrangement of non-evaporable getter for a tube solar collector according to claim 9, **characterized in that** the mirroring is carried out by adding a film or a fine mirror to any of the inner or outer faces of the glass tube.
